# EUROPÄISCHE PATENTANMELDUNG

(11) **EP 4 633 296 A1**
(43) Veröffentlichungstag der Anmeldung: **15.10.2025**
(21) Anmeldenummer: 25166742.4
(22) Anmeldetag: 27.03.2025
(51) Int. Cl.: H05B 47/175

(54) **VERFAHREN ZUR ERZEUGUNG EINES NEUEN BELEUCHTUNGSMERKMALS UND/ODER EINER NEUEN BELEUCHTUNGSINFORMATION UNTER BERÜCKSICHTIGUNG EINER DARBIETUNGSINFORMATION, COMPUTERSYSTEM DAZU EINGERICHTET, DAS VERFAHREN AUSZUFÜHREN, UND COMPUTERPROGRAMM-PRODUKT UMFASSEND SOFTWARE-CODEABSCHNITTE**

(30) Priorität: 12.04.2024 DE 102024110335
(71) Anmelder: MA Lighting Technology GmbH, 97297 Waldbüttelbrunn (DE)
(72) Erfinder: Schneider, Alexander, 97297 Waldbüttelbrunn (DE); Kohl, Michael, 97297 Waldbüttelbrunn (DE); Wursthorn, Tobias, 28307 Bremen (DE)
(74) Vertreter: advotec.

(57) **Zusammenfassung**

Die Erfindung betrifft ein Verfahren zur Erzeugung mindestens einer neuen Beleuchtungsinformation (8) und/oder mindestens eines neuen Beleuchtungsmerkmals, wobei mindestens ein Trainingsdatensatz umfassend einander zugeordnete Darbietungsinformationen (1) und Beleuchtungsinformationen (2) erhalten wird. Weiter wird ein maschinell lernendes Modell (5) mittels einander zugeordneter Beleuchtungsmerkmale (4) und Darbietungsmerkmale (3) erstellt, wobei die Beleuchtungsmerkmale (4) und die Darbietungsmerkmale (3) durch Analysieren vor und/oder während des Erstellens des maschinell lernenden Modells (5) erhalten werden. Anschließend wird eine neue Darbietungsinformation (6) erhalten und mindestens ein neues Beleuchtungsmerkmal (8) und/oder mindestens eine neue Beleuchtungsinformation mittels Inferenz mit dem maschinell lernenden Modell (5) unter Eingabe der neuen Darbietungsinformation (6) und/oder der neuen, mittels Analyse der neuen Darbietungsinformation (6) erhaltenen, Darbietungsmerkmale (7) erzeugt. Die Erfindung betrifft weiter ein Computersystem (20), dazu eingerichtet, eines der Verfahren auszuführen, und ein Computerprogramm-Produkt umfassend Softwarecodeabschnitte, die derart ausgebildet sind, dass das Verfahren durch zumindest einen Prozessor (24) ausführbar ist.

## Beschreibung

Die Erfindung betrifft ein Verfahren zur Erzeugung eines neuen Beleuchtungsmerkmals und/oder einer Beleuchtungsinformation, ein Computersystem dazu eingerichtet, das Verfahren zur Erzeugung der Beleuchtungsinformation auszuführen, und ein Computerprogramm-Produkt umfassend Software-Codeabschnitte, mit denen das Verfahren zur Erzeugung einer Beleuchtungsinformation durch zumindest einen Prozessor ausgeführt wird.

Im Stand der Technik ist es bekannt, Darbietungen, wie Konzerte oder Theaterstücke, aber auch rein auditive Darbietungen, wie Musikstücke in Nachtclubs, durch Lichtshows zu untermalen und/oder die Sichtbarkeit der Darstellung zu erhöhen. Mit der voranschreitenden Lichttechnik wird dem Bedienpersonal eine immer größere Anzahl an Möglichkeiten bereitgestellt. Daher ist es inzwischen nötig, dass Beleuchtungssysteme mittels komplexer Steuerungstechnik angesteuert werden. Dabei haben sich verschiedene Steuerungsprotokolle zur Ansteuerung der einzelnen Beleuchtungsmittel durchgesetzt. In der Regel werden die Lichtshows zunächst in Teilen oder vollständig programmiert und während der Aufführung abgespielt, wobei eine Anpassung in begrenztem Rahmen erfolgen kann.

Die Lichtshows werden als besonders ansprechend empfunden, wenn sie gut auf die gebotene Darbietung abgestimmt sind. Insbesondere bei Musikdarbietungen oder durch Musik unterstrichenen Darbietungen ist eine enge Verknüpfung zwischen der Musik und der Lichtshow gewünscht. Hierfür muss unter guter Kenntnis des Musikstücks sowie unter Berücksichtigung der vor Ort gegebenen Beleuchtungstechnik eine aufwendige Lichtsteuerungssequenz erstellt werden. Im Stand der Technik sind nur wenige Assistenzsysteme für diese Aufgabe bekannt.

Es sind Verfahren bekannt, die die Zuordnung der Musik zu einem bestimmten Genre bzw. einer bestimmten Emotion durch Analyse umfassen und daraufhin eine Grundfarbe, eine Lichtintensität und/oder eine Wechselgeschwindigkeit vorschlagen. Hierdurch ergeben sich jedoch wenig komplexe und nur auf einer niedrigen Ebene mit der Musik verknüpfte Lichtshows, die lediglich als Basis für noch zu erstellende Lichtshows verwendet werden können und aufwendig weiter bearbeitet und finalisiert werden müssen.

Aus der US 11,687,760 B2 ist zudem ein Verfahren bekannt, das mit Hilfe einer Vielzahl an zuvor erstellten Lichtshows dem Benutzer nach Eingabe erster Befehle mindestens einen weiteren Befehl vorschlägt, der statistisch gesehen häufig auf die bis jetzt eingegebenen Befehle folgt.

Die im Stand der Technik bekannten Verfahren haben den Nachteil, dass die Musik nicht oder nur rudimentär bei der Erstellung der Lichtshows berücksichtigt wird, sodass der Arbeitsaufwand für das Bedienpersonal weiterhin hoch bleibt. Insbesondere ist es mit den bekannten Verfahren nicht möglich, komplexe Lichtshows vorzuschlagen oder bei deren Erstellung unter Berücksichtigung der zu untermalenden Darbietung zu assistieren. Weiter kann insbesondere nicht die konkret vorliegende Beleuchtungstechnik in der nötigen Tiefe berücksichtigt werden.

Es besteht daher ein großer Bedarf an einem Verfahren zur Erzeugung einer Beleuchtungsinformation, die die zu untermalende Darbietung in erfindungsgemäß ausreichender Tiefe berücksichtigt, und auf diese Weise die Erstellung von Lichtshows weitgehend unterstützt und/oder automatisiert.

Diese Aufgabe wird auf überraschend einfache aber wirkungsvolle Weise durch ein Verfahren nach der Lehre des unabhängigen Anspruchs 1, ein Computersystem gemäß dem unabhängigen Anspruch 14 und ein Computerprogramm-Produkt gemäß dem unabhängigen Anspruch 15 gelöst.

Erfindungsgemäß ist ein Verfahren zur Erzeugung eines neuen Beleuchtungsmerkmals und/oder einer Beleuchtungsinformation, umfassend folgende Schritte, vorgeschlagen:
a) Erhalten mindestens eines Trainingsdatensatzes umfassend mindestens eine Darbietungsinformation, insbesondere eine Darbietungsaufnahme, und mindestens eine Beleuchtungsinformation, insbesondere einen Steuerungsdatensatz, wobei die Darbietungsinformation und die Beleuchtungsinformation einander zugeordnet sind;
b) Erstellen eines maschinell lernenden Modells mittels mindestens eines Beleuchtungsmerkmals und mindestens eines Darbietungsmerkmals, wobei das mindestens eine Beleuchtungsmerkmal und das mindestens eine Darbietungsmerkmal durch Analysieren vor und/oder während des Erstellens des maschinell lernenden Modells erhalten werden und wobei das mindestens eine Darbietungsmerkmal und das mindestens eine Beleuchtungsmerkmal einander zugeordnet sind;
c) Erhalten einer neuen Darbietungsinformation;
d) Ermitteln mindestens eines neuen Beleuchtungsmerkmals und/oder mindestens einer neuen Beleuchtungsinformation mittels Inferenz mit dem maschinell lernenden Modell unter Eingabe der neuen Darbietungsinformation und/oder mindestens eines neuen Darbietungsmerkmals, wobei das neue Darbietungsmerkmal durch Analysieren der neuen Darbietungsinformation erhalten wird.

Die Erfindung beruht auf dem Grundgedanken, dass durch eine Analyse mindestens einer bekannten Darbietung, insbesondere des Ablaufs der Darbietung, im Zusammenhang mit mindestens einer der Darbietung zugeordneten Beleuchtung, insbesondere dem Ablauf der Beleuchtung, mindestens ein Zusammenhang zwischen Darbietung und Beleuchtung aufgefunden wird. Diesem Zusammenhang entsprechend kann bei einer Analyse einer neuen Darbietung, zu der keine Beleuchtung bekannt ist, ein die neue Darbietung berücksichtigender Vorschlag für eine neue Beleuchtung gemacht werden. Dabei ist zu beachten, dass eine größere Anzahl und/oder eine bessere Qualität an Trainingsdatensätzen zu besseren Ergebnissen, das heißt zu besser passenden neuen Beleuchtungen, führt. Daher ist es bevorzugt, dass in Schritt a) mindestens zwei, drei, vier, fünf, sechs, sieben, acht, neun, zehn, fünfzehn, zwanzig, fünfundzwanzig, dreißig, fünfunddreißig, vierzig, fünfundvierzig, fünfzig, fünfundfünfzig, sechzig, fünfundsechzig, siebzig, fünfundsiebzig, achtzig, fünfundachtzig, neunzig, fünfundneunzig, einhundert, einhundertfünfzig, zweihundert, zweihundertfünfzig, dreihundert, dreihundertfünfzig, vierhundert, vierhundertfünfzig, fünfhundert, sechshundert, siebenhundert, achthundert, neunhundert, eintausend, fünftausend, zehntausend, fünfzigtausend, einhunderttausend oder mehr Trainingsdatensätze erhalten werden.

Weiter kann das Ergebnis des in Schritt d) erhaltenen neuen Darbietungsmerkmals und/oder der in Schritt d) erhaltenen neuen Darbietungsinformation auch durch gezielte Auswahl der Trainingsdatensätze einer bestimmten Art der Darbietung verbessert werden, wenn die neue Darbietung derselben Art zugehörig ist. In diesem Fall werden auch bei geringerer Anzahl an Trainingsdatensätzen ausreichend gute Ergebnisse erzielt.

In Schritt a) werden die Trainingsdatensätze erhalten. Dies ermöglicht die Ausführung der anschließenden Schritte. Wie die Trainingsdatensätze erhalten werden, ist dabei unerheblich, bevorzugt handelt es sich um Darbietungen und/oder Beleuchtungen, die jeweils von mindestens einer geschulten und/oder erfahrenen Person erstellt und in dieser Art aufgeführt worden sind. Ebenfalls ist unerheblich, wie die Zuordnung erfolgt, solange diese von einem Computer erkennbar ist. Besonders bevorzugt bilden Darbietungsinformation und Beleuchtungsinformation ein Tupel. Dabei können die Darbietungsinformation und die Beleuchtungsinformation in einer Datei zusammengefasst sein, beispielsweise einer Videoaufnahme einer Darbietung, die ebenfalls die Beleuchtung umfasst.

In Schritt b) werden die Darbietungsinformation und die Beleuchtungsinformation analysiert, wodurch mindestens ein Darbietungsmerkmal und mindestens ein Beleuchtungsmerkmal erhalten werden. Das mindestens eine Darbietungsmerkmal und das mindestens eine Beleuchtungsmerkmal sind einander zugeordnet. Es ist unerheblich, wie die Zuordnung erfolgt, solange diese von einem Computer erkennbar ist. Besonders bevorzugt bilden das mindestens eine Darbietungsmerkmal und das mindestens eine Beleuchtungsmerkmal ein Tupel. Es ist bevorzugt, wenn in Schritt b) durch das Analysieren mindestens ein, zwei, drei, vier, fünf, sechs, sieben, acht, neun, zehn, fünfzehn, zwanzig, fünfundzwanzig, dreißig, fünfunddreißig, vierzig, fünfundvierzig, fünfzig, fünfundfünfzig, sechzig, fünfundsechzig, siebzig, fünfundsiebzig, achtzig, fünfundachtzig, neunzig, fünfundneunzig, einhundert, einhundertfünfzig, zweihundert, zweihundertfünfzig, dreihundert, dreihundertfünfzig, vierhundert, vierhundertfünfzig, fünfhundert, sechshundert, siebenhundert, achthundert, neunhundert, eintausend, fünftausend, zehntausend, fünfzigtausend oder einhunderttausend Darbietungsmerkmale und/oder Beleuchtungsmerkmale erhalten werden. Besonders bevorzugt werden beim Analysieren in Schritt b) zumindest teilweise gleichartige Darbietungsmerkmale und/oder Beleuchtungsmerkmale erhalten. Hierdurch ist es möglich, in Schritt b) ein besonders aussagekräftiges maschinell lernendes Modell zu erstellen, das eine große Anzahl an Darbietungsmerkmalen und/oder Beleuchtungsmerkmalen berücksichtigen kann. Hierdurch wird ein tiefergehendes Erkennen der Zusammenhänge zwischen der Darbietung und der Beleuchtung ermöglicht, sodass die neue Darbietung bei der Erstellung des neuen Beleuchtungsmerkmals und/oder der neuen Beleuchtungsinformation in einem besonders tiefen Maße berücksichtigt werden kann. Dabei ist es bevorzugt denkbar, dass das Programm, das das maschinell lernende Modell erstellt, und/oder das maschinell lernende Modell selbst die Analyse, insbesondere durch Abruf und/oder Ausführung von Subprogrammen und/oder Funktionen, durchführt. Besonders bevorzugt ist es alternativ oder zusätzlich denkbar, dass zunächst eine Analyse durchgeführt wird und erst anschließend das maschinell lernende Modell erstellt wird.

Das maschinell lernende Modell wird bevorzugt derart erstellt, dass statistische Zusammenhänge, Strukturen und/oder Muster zwischen dem mindestens einen Beleuchtungsmerkmal und dem mindestens einen Darbietungsmerkmal erkennt werden. Mit anderen Worten wird das maschinell lernende Modell mit Hilfe der Merkmale aus den analysierten Trainingsdatensätzen trainiert. Bevorzugt handelt es sich bei dem Trainieren um überwachtes Lernen, unüberwachtes Lernen oder bestärkendes Lernen. Besonders bevorzugt ist das maschinell lernende Modell ein künstliches neuronales Netzwerk, insbesondere ein rekurrentes neuronales Netzwerk (RNN), ein Feedforward neuronales Netzwerk (FNN), ein faltendes neuronales Netzwerk (Convolutional Neural Network - CNN), ein Transformer, ein flussbasiertes generatives Modell (Flow Based Generative Model), ein entwickeltes neuronales Netzwerk (Evolving Neural Network), ein Codierer-Decodierer-Modell (Encoder-Decoder-Model), ein Variational Autoencoder, ein autoregressives Modell (ARMA-Modell), eine beschränkte Boltzmannmaschine (Restricted Boltzmann Machine - RBM) und/oder ein Diffusionsmodell (Diffusion Model), ein verdecktes Markovmodell (Hidden Markov-Model - HMM) und/oder eine Support-Vector-Machine (SVM). Des Weiteren ist es denkbar, die Methoden des Genetic Programming, des Boostings, des Decision-Tree-Machine-Learnings, der Kerndichteschätzung (Kernel Density Estimation - KDE), des Expertensystems (Expert Systems - ES), eines (naiven) Bayes-Klassifikators, des Gradient-Boostings, der linearen Diskriminanzanalyse (Linear Discriminant Analysis), der Nächsten-Nachbarn-Klassifikation (Nearest Neighbour Classificator), eines Cluster-Analyse-Verfahrens, insbesondere des Single-Linkage-Verfahrens, des Complete-Linkage-Verfahrens, des Ward-Verfahrens, des K-Means-Algorithmus, des Fuzzy-C-Means-Algorithmus, des Erwartungs-Maximierungs-Algorithmus (EM-Algorithmus), des DBSAN (Density-Based Spatial Clustering of Applications with Noise), des STING-Algorithmus (Statistical Information Grid-based Clustering-Algorithmus) und/oder des CLI-QUE-Algorithmus (Clustering Inquest-Algorithmus), und/oder eines Verfahrens der Anomaliedetektion, insbesondere des Local-Outlier-Factor (LOF), des Isolation Forest und/oder des Autoencoders, und/oder der Hauptkomponentenanalyse (Principal Component Analysis - PCA) einzusetzen. Weiter können Verfahren des bestärkenden Lernens (Reinforcement Learning) verwendet werden, wie assoziiertes bestärkendes Lernen (Associative Reinforced Learning), tiefes bestärkendes Lernen (Deep Reinforcement Learning), gegensätzliches tiefes bestärkendes Lernen (Adversarial Deep Reinforcement Learning), unscharfes bestärkendes Lernen (Fuzzy Reinforcement Learning) und/oder sicheres bestärkendes Lernen (Safe Reinforcement Learning). Insbesondere ist es denkbar, dass ebenfalls Verfahren zur Clusterbildung von Daten verwendet werden. Dem Fachmann sind geeignete Maßnahmen zur Erstellung, Verwendung und/oder zum Training bekannt. Es ist ebenfalls denkbar, dass die Trainingsdaten in einer Datenbank gespeichert werden, wobei die Datenbank in Betrieb beziehungsweise bei Verwendung des erfindungsgemäßen Verfahrens durch neue Trainingsdaten stetig erweitert wird. Dem Fachmann sind weitere maschinell lernfähige Modelle sowie Möglichkeiten zu deren Erstellung, Verwendung und/oder zum Training bekannt.

In Schritt c) wird eine neue Darbietungsinformation erhalten. Bevorzugt handelt es sich bei dieser neuen Darbietungsinformation um eine Darbietungsinformation, für die noch kein neues Beleuchtungsmerkmal und/oder keine Beleuchtungsinformation bekannt ist. Es ist aber ebenfalls denkbar, dass es sich bei der Darbietungsinformation um einen Teil des Trainingsdatensatzes handelt, der jedoch bei der Erstellung des maschinell lernenden Modells im vorangegangenen Schritt nicht berücksichtigt wurde, um die Güte des maschinell lernenden Modells zu testen.

In Schritt d) wird die Darbietungsinformation bevorzugt auf dieselbe Weise wie in Schritt b) analysiert, um mindestens ein neues Darbietungsmerkmal zu erhalten. Bevorzugt ist das mindestens eine neue Darbietungsmerkmal von derselben Art wie das in Schritt b) erhaltene mindestens eine Darbietungsmerkmal. Weiter bevorzugt werden mindestens ein, zwei, drei, vier, fünf, sechs, sieben, acht, neun, zehn, fünfzehn, zwanzig, fünfundzwanzig, dreißig, fünfunddreißig, vierzig, fünfundvierzig, fünfzig, fünfundfünfzig, sechzig, fünfundsechzig, siebzig, fünfundsiebzig, achtzig, fünfundachtzig, neunzig, fünfundneunzig, einhundert, einhundertfünfzig, zweihundert, zweihundertfünfzig, dreihundert, dreihundertfünfzig, vierhundert, vierhundertfünfzig, fünfhundert, sechshundert, siebenhundert, achthundert, neunhundert, eintausend, fünftausend, zehntausend, fünfzigtausend oder einhunderttausend neue Darbietungsmerkmale erhalten, deren jeweilige Art zumindest teilweise mit der jeweiligen Art der in Schritt b) erhaltenen Darbietungsmerkmale übereinstimmt. Dabei ist es denkbar, dass das maschinell lernende Modell selbst die Analyse, insbesondere durch Abruf und/oder Ausführung von Subprogrammen und/oder Funktionen, durchführt. Besonders bevorzugt ist es alternativ oder zusätzlich denkbar, dass zunächst eine Analyse durchgeführt wird und anschließend das neue Darbietungsmerkmal dem in Schritt c) zu erstellenden maschinell lernenden Modell zugeführt wird, wobei dieses mittels Inferenz mindestens ein neues Beleuchtungsmerkmal und/oder eine neue Beleuchtungsinformation ermittelt.

Der Begriff "Darbietungsinformation" betrifft eine Beschreibung und/oder Aufzeichnung einer Präsentation, insbesondere eines Musikstücks und/oder einer Aufführung, in einer von einem Computer verarbeitbaren Weise. Beispiele für Darbietungsinformationen werden an anderer Stelle genannt.

Der Begriff "Beleuchtungsinformation" betrifft eine Beschreibung und/oder Aufnahme einer eine Darbietung begleitenden Lichtshow in einer durch einen Computer bearbeitbaren Weise. Beispiele für Beleuchtungsinformationen werden an anderer Stelle genannt.

Der Begriff "zuordnen" betrifft einen Zustand, bei dem die Darbietungsinformation und die Beleuchtungsinformation in einer durch einen Computer erkennbaren Weise in ein Verhältnis gesetzt sind und/oder als einander zugehörig erkennbar sind.

Der Begriff "maschinell lernendes Modell" betrifft ein Programm, das dazu eingerichtet ist, statistische Zusammenhänge, Muster und/oder Strukturen zwischen Beleuchtungsinformationen, Beleuchtungsmerkmalen, Darbietungsinformationen und/oder Darbietungsmerkmalen ohne explizite Vorgabe in der Programmierung zu erkennen und basierend darauf auf Grundlage einer neuen Darbietungsinformation und/oder mindestens eines neuen Darbietungsmerkmals mindestens eine neue Beleuchtungsinformation und/oder mindestens ein neues Beleuchtungsmerkmal zu ermitteln. Dabei betrifft der Begriff "Erstellen" insbesondere ein erstmaliges Trainieren des maschinell lernenden Modells.

Der Begriff "analysieren" betrifft die systematische, bevorzugt ganzheitliche, Untersuchung der Darbietungsinformation, der neuen Darbietungsinformation und/oder der Beleuchtungsinformation, wobei insbesondere eine Zergliederung, eine Zerlegung in die Bestandteile, eine Ordnung, eine Einordnung und/oder eine Abstraktion des Gesamten, einzelner Glieder und/oder der Bestandteile vorgenommen wird.

Der Begriff "Merkmal" betrifft ein Ergebnis der Analyse, das die Darbietungsinformation, die neue Darbietungsinformation oder die Beleuchtungsinformation ganzheitlich oder teilweise beschreibt, einordnet, ordnet, in eine Beziehung setzt und/oder strukturiert. Der Begriff "Merkmal" ist dabei nicht dahingehend eingeschränkt, dass ein Merkmal von einem Menschen insbesondere außerhalb des maschinell lernenden Modells nachvollzogen, interpretiert, ausgelesen und/oder verstanden werden kann. Beispiele für Merkmale werden an anderer Stelle genannt.

Der Begriff "erhalten" betrifft das Bereitstellen der Darbietungsinformation, der Beleuchtungsinformation, des mindestens einen Darbietungsmerkmals, des mindestens einen Beleuchtungsmerkmals, der mindestens einen neuen Darbietungsinformation, des mindestens einen neuen Darbietungsmerkmals und/oder des mindestens einen neuen Beleuchtungsmerkmals in einer Form, in der ein das Verfahren ausführender Computer diese weiter behandeln und/oder weiter bearbeiten kann.

Der Begriff "Inferenz" betrifft das Ableiten mindestens eines neuen Beleuchtungsmerkmals und/oder mindestens einer neuen Beleuchtungsinformation mittels des durch Training erstellten maschinell lernenden Modells.

Mittels der Erfindung ist es möglich, auf schnelle und einfache Weise Vorschläge ganzer Lichtshows oder von Teilen einer Lichtshow im Zusammenhang mit der Darbietung zu erstellen und somit auf einfache Weise entsprechende Darbietungen beleuchtungstechnisch zu unterstreichen. Dabei ist es insbesondere möglich, die Lichtshows als Datenpakete bereitzustellen, die direkt an die Beleuchtungsmittel gesendet werden können, und/oder Vorschläge für Beleuchtungsmerkmale dem eine Lichtshow erstellenden Benutzer anzuzeigen.

Vorteilhafte Weiterbildungen der Erfindung, welche einzeln oder in Kombination realisierbar sind, sind in den Unteransprüchen dargestellt.

Es ist denkbar, dass das Verfahren einen Schritt e) nach dem Schritt d) umfasst:
e) Generieren mindestens eines Beleuchtungssteuerungsbefehls aus dem mindestens einen neuen Beleuchtungsmerkmal.

Im Rahmen der Erfindung ist erkannt worden, dass, wie an anderer Stelle beschrieben, zur Ansteuerung von modernen Beleuchtungsanlagen bestimmte Protokolle verwendet werden und mittels dieser die einzelnen Beleuchtungsmittel durch Beleuchtungssteuerbefehle gesteuert werden. Daher ist es vorteilhaft und zeitersparend, wenn das neue Beleuchtungsmerkmal in einen Beleuchtungssteuerungsbefehl umgesetzt wird. Auf diese Weise kann die Ansteuerung auf Grundlage des mindestens einen Beleuchtungsmerkmals direkt erfolgen, und ein Beleuchtungsprogramm bzw. eine Lichtshow oder ein Teil einer Lichtshow kann vollautomatisch erstellt werden. Zusätzlich oder alternativ wäre es denkbar, das neue Beleuchtungsmerkmal in einer Weise an die die Lichtshow erstellende Person auszugeben, die für den Menschen leicht und schnell verständlich ist. Es ist aber ebenfalls denkbar, dass die in Schritt d) erhaltene Beleuchtungsinformation einen Beleuchtungssteuerungsbefehl umfasst.

In einer Weiterbildung der Erfindung ist es denkbar, dass die Darbietungsinformation und die Beleuchtungsinformation eine Zeitkomponente umfassen, wobei in Schritt b) dem mindestens einen Darbietungsmerkmal und dem mindestens einem Beleuchtungsmerkmal ein Wert der Zeitkomponente zugeordnet wird und/oder ist und beim Erstellen des maschinell lernenden Modells der Wert der Zeitkomponente berücksichtigt wird, und wobei die neue Darstellungsinformation in Schritt c) eine neue Zeitkomponente umfasst, und wobei in Schritt d) dem neuen Darbietungsmerkmal ein neuer Wert der neuen Zeitkomponente zugeordnet wird und/oder ist und das Ermitteln des mindestens einen neuen Beleuchtungsmerkmals und/oder der mindestens einen neuen Beleuchtungsinformation mittels Inferenz mit dem maschinell lernenden Modell den neuen Wert der neuen Zeitkomponente berücksichtigt. Bei der Zeitkomponente kann es sich insbesondere um eine Zeitspanne handeln, die seit Anbeginn der Darbietung verstrichen ist. Die Zeitkomponente kann insbesondere in Sekunden, Minuten und/oder Stunden angegeben sein. Es ist aber auch ebenfalls denkbar, dass die Zeitkomponente anhand wiederkehrender Elemente in der Darbietung, insbesondere durch Abzählung, ermittelt wird. Dies ist beispielsweise der Fall, wenn die Darbietung ein Musikstück ist und die Zeitkomponente in der Anzahl von vergangenen Takten oder Taktschlägen gemessen wird. Durch diese Art der Zeitbeschreibung kann eine exakte Synchronisierung zwischen Beleuchtung und Darbietung erreicht werden. Die bevorzugte Ausgestaltung hat den Vorteil, dass bevorzugte Beleuchtungsmerkmale, die mit dem zeitlichen Ablauf der Darbietung zusammenhängen, durch das maschinell lernende Modell berücksichtigt werden und auf diese Weise bessere, das heißt als passender empfundene, neue Beleuchtungsmerkmale bestimmt werden können. Im Rahmen der Erfindung ist es beispielsweise erkannt worden, dass häufig insbesondere am Anfang der Darbietung, das heißt bei kleinen Werten der Zeitkomponente der Darbietung, gedämpfteres Licht gewählt wird als zur Mitte der Darbietung.

Der Begriff "berücksichtigen" betrifft das erfassbare Bereitstellen der Zeitkomponente und/oder der neuen Zeitkomponente, in einer Weise, dass das maschinell lernende Modell hierin statistische Zusammenhänge, Muster und/oder Strukturen insbesondere zu den anderen Merkmalen und/oder Informationen erkennen kann, jedoch nicht muss.

In einer weitergehenden Ausgestaltung ist es denkbar, dass in Schritt b) mindestens zwei Darbietungsmerkmale und mindestens zwei Beleuchtungsmerkmale analysiert werden und dem ersten Darbietungsmerkmal und dem ersten Beleuchtungsmerkmal ein erster Wert der Zeitkomponente und dem zweiten Darbietungsmerkmal und dem zweiten Beleuchtungsmerkmal ein zweiter Wert der Zeitkomponente zugeordnet wird und/oder ist und beim Erstellen des maschinell lernenden Modells die Relation des ersten Werts der Zeitkomponente und des zweiten Werts der Zeitkomponente zueinander berücksichtigt wird, wobei in Schritt d) mindestens zwei neue Darbietungsmerkmale erhalten werden und dem ersten neuen Darbietungsmerkmal ein erster neuer Wert der neuen Zeitkomponente und dem zweiten neuen Darbietungsmerkmal ein zweiter neuer Wert der neuen Zeitkomponente zugeordnet wird und das Ermitteln des mindestens einen neuen Beleuchtungsmerkmals und/oder der mindestens einen neuen Beleuchtungsinformation mittels Inferenz mit dem maschinell lernenden Modell die Relation des ersten neuen Werts der neuen Zeitkomponente und des zweiten neuen Werts der neuen Zeitkomponente zueinander berücksichtigt. Im Rahmen der Erfindung ist es erkannt worden, dass bei der Wahl des Beleuchtungsmerkmals in der Regel nicht nur der zeitliche Abstand und/oder die vergangene Zeit in der Darbietung ausschlaggebend sind, sondern auch die zeitliche Relation einer ersten Stelle in der Darbietung zu anderen Stellen in der Darbietung. Beispielsweise wird bei einem musikalischen Formteilwechsel von schnell zu langsam in der Regel eine andere Beleuchtungsstrategie gewählt als bei einem musikalischen Formteilwechsel von langsam zu schnell. Die Verwendung mindestens zweier Merkmale mit unterschiedlichen Zeitkomponenten ermöglicht es, diese Relation zueinander abzubilden und zu berücksichtigen. Hierdurch lassen sich ebenfalls besonders ansprechende Beleuchtungsshows erstellen.

Überdies ist es denkbar, dass die Analyse in Schritt b) und/oder in Schritt d) mindestens zweistufig ist, wobei in einer ersten Stufe der Analyse mindestens ein Darbietungsmerkmal der ersten Stufe direkt aus der Darbietungsinformation und/oder ein Beleuchtungsmerkmal der ersten Stufe direkt aus der Beleuchtungsinformation erlangt wird, und wobei in einer n-ten Stufe der Analyse mindestens ein Darbietungsmerkmal der n-ten Stufe aus der Darbietungsinformation und/oder einem Darbietungsmerkmal einer niedrigen Stufe erlangt wird und/oder ein Beleuchtungsmerkmal der n-Stufe direkt aus der Beleuchtungsinformation und/oder mindestens einem erlangten Beleuchtungsmerkmal einer niedrigen Stufe erlangt wird. Mit anderen Worten wird in einer ersten Stufe der Analyse ein erstes Merkmal erlangt, das zusammen mit der Information selbst die Basis für eine zweite Analyse einer zweiten Stufe bildet, wodurch ein Merkmal der zweiten Stufe erlangt wird. Dem können sich weitere Stufen der Analyse anschließen, die jeweils ein Merkmal der niedrigeren Stufen berücksichtigen. Bevorzugt handelt es sich dabei um mindestens ein Merkmal aus der direkt zuvor erfolgten Analysestufe. Im Rahmen der Erfindung ist es erkannt worden, dass aussagekräftige Merkmale die Grundlage für die weitere Analyse bilden können. Insbesondere ist es möglich, einem Musikstück eine Emotion aus verschiedenen Merkmalen zuzuordnen, wobei diese insbesondere das Tempo, die Tonhöhe, die Tonart, die Stimmlage, die Auswahl an Instrumenten und/oder die Spielart der Instrumente umfassen können. Diese Merkmale können bei einer oder mehreren vorangegangenen Analysen bestimmt werden, wobei die Emotion bei einer nachfolgenden Analyse aus diesen Merkmalen bestimmt wird. Bevorzugt umfasst die Analyse mindestens drei, vier, fünf, sechs, sieben, acht, neun, zehn, elf, zwölf, dreizehn, vierzehn, fünfzehn, sechszehn, siebzehn, achtzehn, neunzehn oder zwanzig Stufen. Weiter bevorzugt wird bei der mehrstufigen Analyse die Analysemethode in der zweiten und/oder einer höheren Stufe auf Grundlage mindestens eines Darbietungsmerkmals einer niedrigeren Stufe und/oder von dessen Wert, auf Grundlage mindestens eines Beleuchtungsmerkmals einer niedrigeren Stufe und/oder von dessen Wert und/oder auf Grundlage mindestens eines neuen Darbietungsmerkmals einer niedrigeren Stufe und/oder von dessen Wert ausgewählt. Im Rahmen der Erfindung ist erkannt worden, dass sich statistische Zusammenhänge, Muster und/oder Strukturen auch aus den konkreten Werten der Merkmale ergeben können und ausgehend von diesen Werten bestimmte Analysen sinnvoll sein können.

Der Begriff "n-te Stufe" betrifft eine Stufe, die mittels einer Reihe natürlicher Zahlen bezeichnet ist, wobei n ein Element der natürlichen Zahlenmenge ohne 1 ist. Mit anderen Worten ist eine "n-te Stufe" eine beliebige Stufe aus der logisch fortgesetzten Reihe der zweiten Stufe, dritten Stufe, vierten Stufe...

In einer Weiterbildung der Erfindung ist es denkbar, dass die Darbietungsinformation und/oder die neue Darbietungsinformation eine Audiodatei, insbesondere eine Audioaufnahme, eine Videodatei, insbesondere eine Videoaufnahme, ein Notenblatt und/oder einen Text umfasst. Besonders bevorzugt handelt es sich bei der Audiodatei um ein Musikstück. Weiter bevorzugt handelt es sich bei der Videodatei um eine Videoaufzeichnung einer musikalischen Darbietung und/oder eines Bühnenwerks, insbesondere einer Theateraufführung, einer Oper, eines Musicals, eines Balletts und/oder einer Tanzdarbietung. Ebenfalls bevorzugt ist der Text eine Beschreibung und/oder Anweisungen betreffend die zuvor genannten Werke. Besonders bevorzugt zeigt die Abbildung, insbesondere die Abfolge von Abbildungen, eine Choreographie, eine Szenerie und/oder eine Inszenierung. Weiter bevorzugt umfasst der Text eine Beschreibung und/oder eine textliche Fixierung eines Bühnenwerks und/oder eine textliche Fixierung einer Choreographie. Dem Fachmann sind Dateiformate bekannt, die geeignet sind, die bevorzugten Darbietungsinformationsarten beziehungsweise neue Darbietungsinformationsarten, die zuvor aufgezählt worden sind, zu erhalten und/oder zu analysieren, wie beispielsweise ein Computer, ein Computersystem und/oder ein Computerprogramm.

Bevorzugt ist es denkbar, dass die Beleuchtungsinformation mindestens einen Steuerungsdatensatz und/oder ein Steuerungsdatenpaket, mindestens einen Simulationsdatensatz, mindestens ein Modell, insbesondere ein virtuelles 3D-Modell, mindestens einen Text, insbesondere eine Konzeptbeschreibung und/oder ein Skript, mindestens eine Abbildung, insbesondere eine Reihe von Abbildungen, mindestens ein Cue, insbesondere eine Reihe von Cues, mindestens ein Preset, mindestens eine Sequenz, mindestens ein Stack, mindestens einen Graphen, insbesondere einen Graphen mit Positionsangaben und/oder mit Bewegungsangaben, mindestens einen Plan, insbesondere einen Belegungsplan, mindestens eine Videodatei, insbesondere eine Videoaufnahme und/oder Simulation, mindestens eine Beschreibung, insbesondere eine Beschreibung umfassend einen Patch, mindestens einer Gruppierung und/oder mindestens einen Algorithmus und/oder mindestens ein Datenpaket, insbesondere umfassend Recipes, MAtricks, Phasers, Timecodes, Macros, Lua Plugins, Filter, Selektionen, Effekte, BitMaps und/oder Generatoren, umfasst. Besonders bevorzugt ist das Steuerungsdatenpaket ein DMX-Datenpaket oder ein Artnet-Datenpaket. Dabei handelt es sich um die am weitesten verbreiteten Protokolle zur Steuerung von Lichttechnik. Besonders bevorzugt umfasst der Steuerungsdatensatz selbst mindestens ein Preset, mindestens ein Cue, mindestens eine Sequenz und/oder mindestens ein Stack. Bei dem Simulationsdatensatz handelt es sich bevorzugt um eine Simulation einer Bühne mit darauf angeordneten Beleuchtungsmitteln. Besonders bevorzugt führen diese Beleuchtungsmittel Bewegungen und/oder Einstellungswechsel, wie das Ein- und Ausschalten, Veränderungen der Intensität, des Fokus, der Form und/oder Farbe durch. Weiter bevorzugt zeigt das Modell ebenfalls eine Bühne mit Beleuchtungsmitteln. Weiter bevorzugt umfasst der Text eine Beschreibung, insbesondere eine Konzeptbeschreibung und/oder ein Skript, eines Beleuchtungsablaufs auf einer Bühne. Weiter bevorzugt umfasst der Text eine Anzahl und/oder eine Gruppierung von Beleuchtungsmitteln sowie deren Typ. Besonders bevorzugt zeigt die Abbildung, insbesondere die Reihe von Abbildungen, verschiedene zeitlich nacheinander angeordnete Beleuchtungsmittel einer Bühne. Besonders bevorzugt zeigt der Graph die Positionierung und/oder die Bewegungsabläufe samt Beleuchtungsmitteln. Weiter bevorzugt zeigt der Plan die Positionsangaben und/oder Informationen einzelner, bevorzugt aller, Beleuchtungsmittel. Noch mehr bevorzugt umfasst der Plan einen Belegungsplan, der eine Anzahl und/oder Art und/oder einen Typ von Beleuchtungsmitteln aufzählt. Weiter bevorzugt zeigt die Videodatei, insbesondere die Videoaufnahme und/oder die Simulation, den Ablauf einer Lichtshow. Weiter ist es denkbar, dass sich die Beleuchtungsinformation aus mehreren der zuvor genannten Merkmale zusammensetzt. Insbesondere ist es denkbar, dass die Beleuchtungsinformation einen Steuerungsdatensatz und einen den Steuerungsdatensatz umsetzenden Simulationsdatensatz umfasst. Weiter ist es vorteilhaft, wenn die Beleuchtungsinformation mindestens ein Datenpaket umfasst, wobei das Datenpaket aus einer Beleuchtungssteuerungssoftware und/oder aus Schnittstellen zu einer Beleuchtungssteuerungssoftware extrahiert worden ist. In der Beleuchtungssteuerungssoftware liegt die Beleuchtungsinformation meist ganzheitlich und/oder umfassend vor, sodass diese besonders aussagekräftig und verlustfrei auswertbar ist.

Darüber hinaus ist es denkbar, dass die Darbietungsinformation und/oder die neue Darbietungsinformation eine Musikinformation, insbesondere eine Musikaufnahme, umfasst, wobei das Darbietungsmerkmal und/oder das neue Darbietungsmerkmal das Tempo, der Takt, der Rhythmus, die Tonart, die Tonfolge, die Tonhöhe, die Stimmlage, das verwendete Instrument und/oder die verwendeten Instrumente, die Art der Verwendung des Instruments und/oder die Art der Verwendung der Instrumente, das Arrangement, der Text, das Frequenzspektrum, die Amplitude, der Frequenzausschlag, die Onset-strength, der Effektivwert, insbesondere der Effektivwert der Frequenz, die MFCC (Mel Frequency Cepstral Coefficients), ein Kanal, insbesondere eine dem Kanal zugeordnete Richtung, eine Emotion, ein Musikgenre, eine Änderung dieser und/oder eine Anzahl dieser ist. Dem Fachmann sind Analysemethoden bekannt, um diese Darbietungsmerkmale aus einer Musikinformation zu extrahieren. Zudem sind geeignete Analysemethoden an anderer Stelle genannt. Die Merkmale können auch in Relation zum Gesamtwerk der Musikdarbietung erfasst werden. Die zuvor genannten Darbietungsmerkmale werden in der Regel bewusst oder unbewusst bei der Erstellung von Lichtshows für Musikdarbietungen berücksichtigt.

Der Begriff "Kanal" betrifft die Einteilung einer Tonspur synchron aufgezeichneter Teile einer Audiodatei, wobei die einzelnen Tonspuren anschließend derart codiert sind, dass sie auf einem oder mehreren Lautsprechern abgespielt werden, damit ein räumliches Klangbild beim Zuhörer entsteht. Der Begriff "Richtung" betrifft die Positionierung im Raum relativ zum Zuhörer.

Der Begriff "Emotion" betrifft eine Zuordnung des Musikstücks zu einem in der Regel vom Zuhörer mit dem Musikstück verbundenen Gefühl. Dabei ist es einerseits denkbar, bekannte Algorithmen und/oder Analysestrukturen zu verwenden und/oder ein neuronales Netzwerk auf die Erkennung von Emotionen mit entsprechenden Trainingsdatensätzen zu trainieren. Dabei kann insbesondere das an anderer Stelle beschriebene mindestens zweistufige Analyseverfahren verwendet werden. Insbesondere kann die Analyse einer höheren Stufe ebenfalls durch ein maschinell lernendes Modell erstellt werden.

In einer Weiterbildung der Erfindung ist es denkbar, dass die Analyse der Darbietungsinformation in Schritt b) und/oder die Analyse der neuen Darbietungsinformation in Schritt e) die Erstellung eines Chromagramms (englisch "chromagram"), insbesondere eines constant-Q-Chromagramms und/oder eines STFT-Chromagramms, eines Tempogramms, eines Spektrogramms, insbesondere eines constant-Q-Spektrogramms oder eines STFT-Spektrogramms, eines Periodogramms, einer Ähnlichkeitsmatrix, einer Änderungshäufigkeitsverteilung, eines Korrelationsmaßes, einer Noveltyfunktion und/oder eines Beat-Tracks und/oder eine Separation von Melodie und Perkussionsquellen umfasst. Dem Fachmann sind geeignete Mittel zur Durchführung der zuvor genannten Analysetechniken bekannt. Weiter ist es denkbar, dass diese Analysemethoden bei einem mehrstufigen Analyseverfahren in einer höheren Stufe durchgeführt werden. Als Beispiel für etwaige Analysetechniken wird auf das Fachbuch "Fundamentals of Music Processing using Python and Jupyter Notebooks" von Meinard Müller gemäß der im Springer-Verlag erschienenen 2. Ausgabe verwiesen. Die Ergebnisse der Analyse stellen Darbietungsmerkmale und/oder neue Darbietungsmerkmale, insbesondere die zuvor aufgezählten Darbietungsmerkmale und/oder neue Darbietungsmerkmale, dar.

Es ist weiterhin denkbar, dass das Beleuchtungsmerkmal und/oder das neue Beleuchtungsmerkmal die Lichtfarbe, der Farbton, die Farbtemperatur, die Helligkeit, der Zoom, der Fokus, die Iris, die Form, die Ausrichtung, die Verdrehung, die Position, eine Anordnung, ein Status, ein Typ, eine Stimmung, eine Anzahl von Beleuchtungsmitteln, insbesondere eine Anzahl von Beleuchtungsmitteln eines Typs, ein Maximalwert dieser, ein Minimalwert dieser, und/oder eine Veränderung dieser ist. Die zuvor genannten Merkmale bzw. deren Änderung definieren den typischen Ablauf einer Lichtshow. Sie können dabei für einige oder alle Beleuchtungsmittel individuell erhalten werden oder mittels einer Gruppierung für mehrere Beleuchtungsmittel gemeinsam erhalten werden.

Der Begriff "Zoom" betrifft die Stärke der Bündelung eines Lichtstrahls eines Beleuchtungsmittels.

Der Begriff "Fokus" betrifft die Abbildungsschärfe insbesondere im Randbereich des Lichtstrahls.

Der Begriff "Iris" betrifft die Öffnungsweite einer Blende.

Der Begriff "Form" betrifft die Ausgestaltung der Umrandung des Lichtstrahls, der durch Blenden oder durch Anordnung mehrerer Lichtquellen beeinflusst werden kann.

Der Begriff "Ausrichtung" betrifft die Richtung, in die die Hauptachse eines Beleuchtungsmittels ausgerichtet ist.

Der Begriff "Verdrehung" betrifft die Rotation eines Beleuchtungsmittels um dessen Hauptachse.

Der Begriff "Position" betrifft die Anordnung eines Beleuchtungsmittels in einem Raum und/oder auf einer Bühne.

Der Begriff "Anordnung" betrifft die Positionierung eines Beleuchtungsmittels relativ zu einem anderen Beleuchtungsmittel oder zu mehreren anderen Beleuchtungsmitteln, insbesondere zu einem anderen Beleuchtungsmittel oder zu anderen Beleuchtungsmitteln desselben Typs.

Der Begriff "Status" betrifft den Zustand eines Beleuchtungsmittels, insbesondere ob dieses ein- oder ausgeschaltet ist.

Der Begriff "Typ" betrifft die Art eines Beleuchtungsmittels. Insbesondere kann der Typ des Beleuchtungsmittels ein PAR-Scheinwerfer, ein Blinder, ein Flutlichtstrahler, ein Linsenscheinwerfer, ein Kopfschwenker, ein Scanner, ein Showlaser, ein LED-Scheinwerfer, eine Flächenleuchte, eine Horizontalleuchte und/oder ein moving light sein. Dem Fachmann sind weitere Beleuchtungsmittel sowie Methoden zu deren Ansteuerung bekannt.

Der Begriff "Stimmung" betrifft eine Emotion, die mit bestimmten Werten der zuvor genannten Merkmale bzw. Änderungen der Merkmale verbunden wird.

Der Begriff "Maximalwert" betrifft die maximale Einstellung der zuvor genannten Merkmale. Der Begriff "Minimalwert" betrifft die minimale Einstellung der zuvor genannten Merkmale. Der Begriff "Veränderung" betrifft einen Einstellungswechsel der zuvor genannten Merkmale.

In einer Weiterbildung ist es denkbar, dass die Analyse der Beleuchtungsinformation in Schritt b) die Erstellung einer Gruppierung, insbesondere einer Gruppierung von Beleuchtungsmitteln anhand von Typ, Ausrichtung und/oder Position, einer Anordnung, einer Ähnlichkeitsmatrix und/oder einer Änderungshäufigkeitsverteilung umfasst. Im Rahmen der Erfindung ist es erkannt worden, dass Beleuchtungsmittel bei einer Lichtshow, insbesondere Beleuchtungsmittel desselben Typs, derselben und/oder ähnlichen Ausrichtung und derselben und/oder ähnlichen Position, ähnliche Merkmale und/oder Bewegungsabläufe sowie Änderungen dieser ausführen. Dabei ist es ebenfalls denkbar, dass ein zeitlicher Versatz zwischen den Merkmalen und/oder der Ausführung zwischen den einzelnen Beleuchtungsmitteln in der Gruppierung auftritt. Dabei kommt es weniger auf die Anzahl der Beleuchtungsmittel, sondern vielmehr auf die zuvor genannten Aspekte an. Wird zunächst eine Gruppierung der Beleuchtungsmittel vorgenommen, so ist eine Vielzahl an Lichtshows in dieser Hinsicht ähnlicher und/oder vergleichbarer, sodass ein stabileres und/oder aussagekräftigeres maschinell lernendes Modell erstellt werden kann. Die Gruppierung stellt dabei eine Abstraktion der Lichtshow dar, wobei die Abstraktion die Erstellung eines maschinell lernenden Modells erleichtert. Weiter ist es im Rahmen der Erfindung erkannt worden, dass Beleuchtungsshows, insbesondere Musikstücke begleitende Beleuchtungsshows, bei ähnlichen Teilen der Musikstücke ähnliche Merkmale aufweisen. Daher bestehen insbesondere zwischen der Ähnlichkeitsmatrix eines Musikstücks und der Ähnlichkeitsmatrix einer Lichtshow statistisch signifikante Parallelen.

Überdies ist es denkbar, dass in Schritt b) beim Erstellen des maschinell lernenden Modells mindestens ein Ortsmerkmal und/oder in Schritt d) beim Ermitteln des mindestens einen neuen Beleuchtungsmerkmals und/oder der mindestens einen neuen Beleuchtungsinformation mindestens ein neues Ortsmerkmal berücksichtigt wird, wobei das Ortsmerkmal und/oder das neue Ortsmerkmal die Umgebungshelligkeit, die Tageszeit, eine Abmessung, insbesondere eine Abmessung einer Bühne und/oder einer Publikumsfläche, eine Platzkategorie, eine Besucheranzahl, eine Lokalität und/oder eine Publikumsstimmung ist. Im Rahmen der Erfindung ist es erkannt worden, dass die zuvor genannten Merkmale starken Einfluss auf die Ausgestaltung der Lichtshow nehmen können.

Der Begriff "Publikumsfläche" betrifft eine Fläche, die dazu vorgesehen ist, bei einer Darbietung mit einem Publikum gefüllt zu werden.

Der Begriff "Platzkategorie" betrifft eine Art oder eine Anordnung eines Platzes, insbesondere ist dieser ein Stehplatz, ein Sitzplatz und/oder der Ort einer Platzkategorie.

Der Begriff "Besucheranzahl" betrifft die geplante und/oder tatsächliche Anzahl an Besuchern bei einer Darbietung.

Der Begriff "Lokalität" betrifft die Art des Orts, an dem die Darbietung stattfindet. Insbesondere ist eine Konzerthalle, ein Konzertsaal, ein Stadion und/oder eine Freifläche eine Art von Lokalität.

Der Begriff "Publikumsstimmung" betrifft die angedachte, vorhergesehene und/oder tatsächliche Stimmung, die im Publikum vorherrscht und/oder vorherrschen soll.

In einer Weiterbildung des Verfahrens ist es denkbar, dass das Verfahren einen Schritt f) nach dem Schritt d) umfasst:
f) Evaluieren des mindestens einen neuen Beleuchtungsmerkmals und/oder der mindestens einen neuen Beleuchtungsinformation.

Die Evaluierung wird bevorzugt durch die Person, der das Beleuchtungsmerkmal vorgeschlagen wird, vorgenommen. Mittels des evaluierten Beleuchtungsmerkmals ist es möglich, das maschinell lernende Modell zu verbessern und/oder zu individualisieren. Dies bewirkt, dass die von dem maschinell lernenden Modell ermittelten neuen Beleuchtungsmerkmale für zukünftige Ausführungen des Verfahrens besser und/oder individueller werden. Dadurch wird die Qualität der Lichtshow gesteigert.

Es wird davon ausgegangen, dass die Definitionen und/oder Ausführungen der oben genannten Begriffe für alle in dieser Beschreibung im Folgenden beschriebenen Aspekte gelten, sofern nichts anders angegeben ist.

Erfindungsgemäß wird weiterhin ein Computersystem vorgeschlagen, das dazu eingerichtet ist, ein Verfahren gemäß den Ansprüchen 1 bis 13 auszuführen, wobei das Computersystem mindestens eine Schnittstelle zum Erhalten mindestens eines Trainingsdatensatzes und/oder zum Erhalten der neuen Darbietungsinformationen zur Ausführung von Schritt a) und Schritt c), ein computerlesbares Speichermedium zur Erstellung und/oder zur Speicherung des maschinell lernenden Modells zur Ausführung von Schritt b) und Schritt d) und mindestens eine Datenverarbeitungseinrichtung zur Ausführung des Schritts b) und des Schritts d) umfasst. Bevorzugt umfasst das Computersystem mindestens zwei Schnittstellen, wobei eine Schnittstelle zum Erhalten des mindestens eines Trainingsdatensatzes zur Ausführung des Schritts a) umfasst ist und die zweite Schnittstelle zum Erhalten der neuen Darbietungsinformation von Schritt d) umfasst ist. Besonders bevorzugt umfasst das Computersystem eine weitere Schnittstelle und/oder die mindestens eine Schnittstelle zur Ausgabe des mindestens einen neuen Darbietungsmerkmals. Mittels des Computersystems sind die im Zusammenhang mit dem Verfahren beschriebenen Vorteile erreichbar. Besonders bevorzugt umfasst das Computersystem eine Datenbank und/oder eine Schnittstelle für eine Datenbank, insbesondere eine Datenbank für Trainingsdatensätze zur Erstellung und/oder Verbesserung des maschinell lernenden Modells.

Weiter erfindungsgemäß ist ein Computerprogramm-Produkt umfassend Softwarecodeabschnitte, die derart ausgebildet sind, dass ein Verfahren nach einem der Verfahrensansprüche 1 bis 13 durch mindestens einen Prozessor ausführbar ist, vorgeschlagen. Hierdurch lassen sich die im Zusammenhang mit dem Verfahren beschriebenen Vorteile des Verfahrens realisieren. Bevorzugt sind die Softwarecodeabschnitte auf einem nichtflüchtigen, computerlesbaren Speichermedium hinterlegt.

Weitere Einzelheiten, Merkmale und Vorteile der Erfindung ergeben sich aus der nachfolgenden Beschreibung der bevorzugten Ausführungsbeispiele in Verbindung mit den Unteransprüchen. Hierbei können die jeweiligen Merkmale für sich alleine oder zu mehreren in Kombination miteinander verwirklicht sein. Die Erfindung ist nicht auf die Ausführungsbeispiele beschränkt. Die Ausführungsbeispiele sind in den Figuren schematisch dargestellt. Gleiche Bezugsziffern in den einzelnen Figuren bezeichnen gleiche oder funktionsgleiche bzw. hinsichtlich ihrer Funktion einander entsprechende Elemente.

Im Einzelnen zeigen:
- **Fig. 1**: eine Ausführung eines erfindungsgemäßen Verfahrens;
- **Fig. 2**: eine Ausführung eines erfindungsgemäßen maschinell lernenden Modells;
- **Fig. 3**: eine Ausführung eines erfindungsgemäßen mehrstufigen Analyseverfahrens;
- **Fig. 4**: eine Ausführung einer erfindungsgemäßen Gruppierung von Beleuchtungsmitteln; und
- **Fig. 5**: eine Ausführung eines erfindungsgemäßen Computersystems.

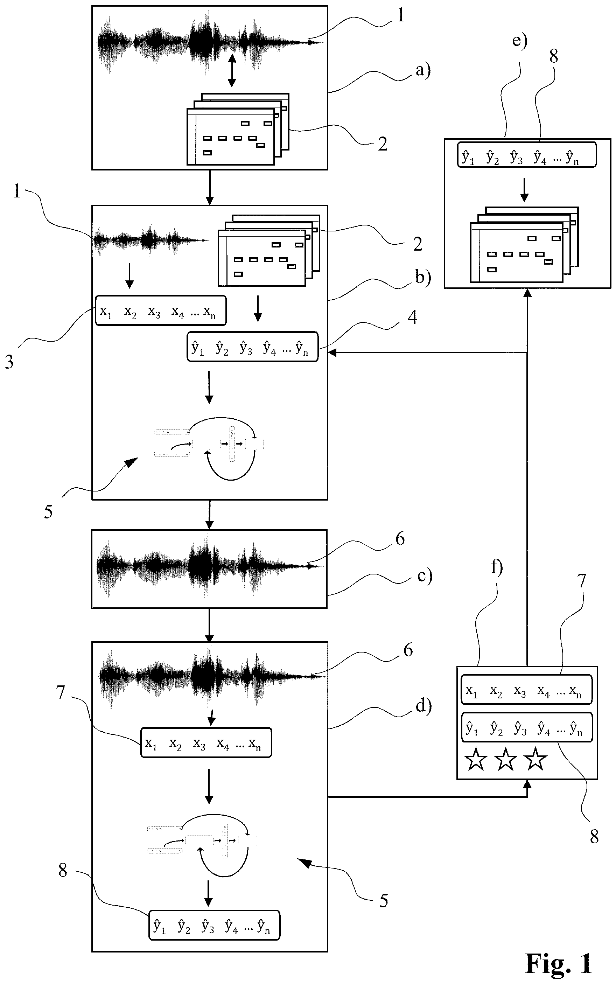

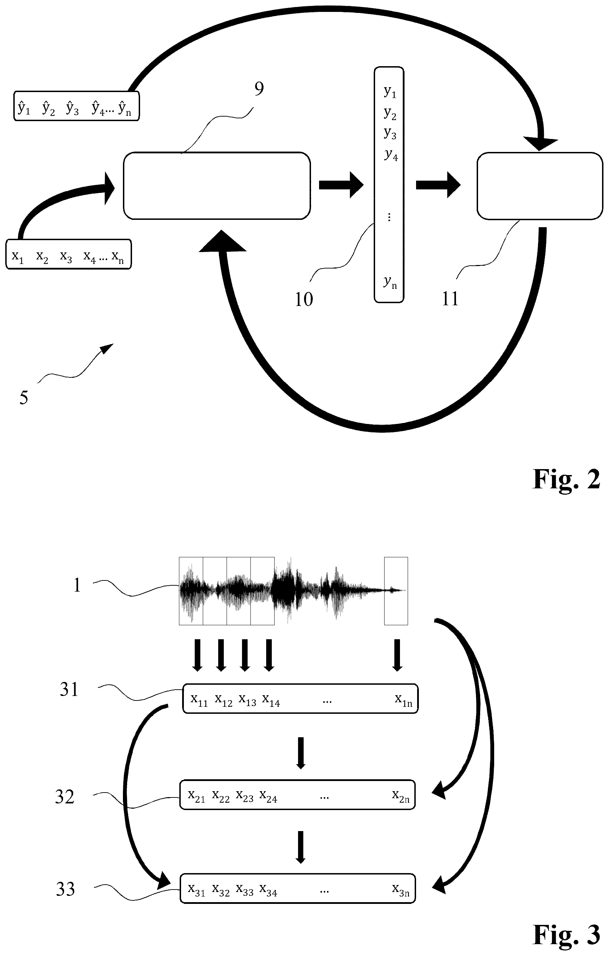

**Fig. 1** zeigt eine bevorzugte Ausführung des erfindungsgemäßen Verfahrens. In einem ersten Schritt a) werden mehrere Trainingsdatensätze erhalten, wobei die Trainingsdatensätze mehrere Darbietungsinformationen 1 und den Darbietungsinformationen 1 zugeordnete Beleuchtungsinformationen 2 umfassen. In der gezeigten Ausführung umfassen die Darbietungsinformationen 1 jeweils eine Aufzeichnung einer Liveaufführung eines Musikstücks, das durch eine Lichtshow begleitet wurde. Die Aufzeichnung umfasst dabei eine Tonspur, die Teil der Darbietungsinformation 1 ist. Die Lichtshow ist in Form einer Sequenz von ArtNet Frames festgehalten. Die Beleuchtungsinformation 2 umfasst diese ArtNetFrames. Den ArtNetFrames ist weiter ein Wert eine Zeitkomponente zugeordnet, indem ihnen Timestamps entsprechend der Aufzeichnung zugeordnet worden sind. Auf den Schritt a) folgt ein Schritt b), in dem die Darbietungsinformationen 1 und die Beleuchtungsinformationen 2 zunächst analysiert werden, wodurch mehrere Darbietungsmerkmale 3 und mehrere Beleuchtungsmerkmale 4 erhalten werden. Den Beleuchtungsmerkmalen 4 und den Darbietungsmerkmalen 3 werden die Werte der Zeitkomponente jeweils zugeordnet. Dabei wird auch jeweils eine Ähnlichkeitsmatrix für die Tonspur und die ArtNetFrames erstellt. Anschließend wird ein maschinell lernendes Modell 5 auf Grundlage der Darbietungsinformationen 1 und der Beleuchtungsinformationen 2 erstellt, welches in Fig. 2 näher erläutert wird. Im nächsten Schritt c) wird eine neue Darbietungsinformation 6 erhalten, die eine Aufzeichnung eines Musikstücks ist und ebenfalls eine Tonspur umfasst. Die neue Darbietungsinformation 6 wird im anschließenden Schritt d) ebenfalls analysiert, und es werden mehrere neue Darbietungsmerkmale 7 erhalten, wobei diese ebenfalls mit Werten der Zeitkomponente verknüpft werden. Dabei wird ebenfalls eine Ähnlichkeitsmatrix erstellt. Die neuen Darbietungsmerkmale 7 werden dem in Schritt b) erstellten maschinell lernenden Modell 5 zugeführt, das mittels Inferenz mehrere neue Beleuchtungsmerkmale 8 ermittelt. In einem folgenden Schritt f) werden die neuen Beleuchtungsmerkmale 8 evaluiert, und das Ergebnis wird dem in Schritt b) erstellten maschinell lernenden Modell 5 zur Verbesserung zusammen mit den neuen Beleuchtungsmerkmalen 8 und den neuen Darbietungsmerkmalen 7 zugeführt. In einem Schritt e) wird ein Beleuchtungssteuerungsbefehl aus dem mindestens einen neuen Beleuchtungsmerkmal 8 erstellt.

**Fig. 2** zeigt das in dem in Fig. 1 gezeigten Verfahren verwendete maschinell lernende Modell 5. Dabei werden die Darbietungsmerkmale 3 und die Beleuchtungsmerkmale 4 in das maschinell lernende Modell 5 eingegeben, das als ein Sequenz-zu-Sequenz Generationsmodell 9 (sequence-to-sequence generation model) auf Basis eines neuronalen Netzwerks ausgebildet ist. Die Beleuchtungsmerkmale 4 bilden dabei Zielwerte für eine Fehlerrückführung. Das Generationsmodell 9 generiert Zwischenmerkmale 10, die einem Überwachungsmodul 11 zur Bestimmung der Verlustfunktion eingegeben werden, welches Teil der Fehlerrückführung ist. Das Überwachungsmodul 11 bewertet die Werte der Zwischenmerkmale 10 mittels der Verlustfunktion und gibt die Wertung als Feedback an das Generationsmodell 9 zurück. Das Generationsmodell 9 erstellt daraufhin neue Zwischenmerkmale 10. Auf diese Weise wird das maschinell lernende Modell 5 trainiert.

**Fig. 3** zeigt eine Ausführung einer erfindungsgemäßen dreistufigen Analyse von einer Darbietungsinformation 1. In einer ersten Stufe werden Darbietungsmerkmale der ersten Stufe 31 direkt aus der Darbietungsinformation erhalten. In einer zweiten Stufe werden Darbietungsmerkmale der zweiten Stufe 32 aus den Darbietungsmerkmalen der ersten Stufe 31 und der Darbietungsinformation erhalten. In einer dritten Stufe werden aus den Darbietungsmerkmalen der ersten Stufe 31, den Darbietungsmerkmalen der zweiten Stufe 32 und der Darbietungsinformation Darbietungsmerkmale 33 der dritten Stufe erhalten.

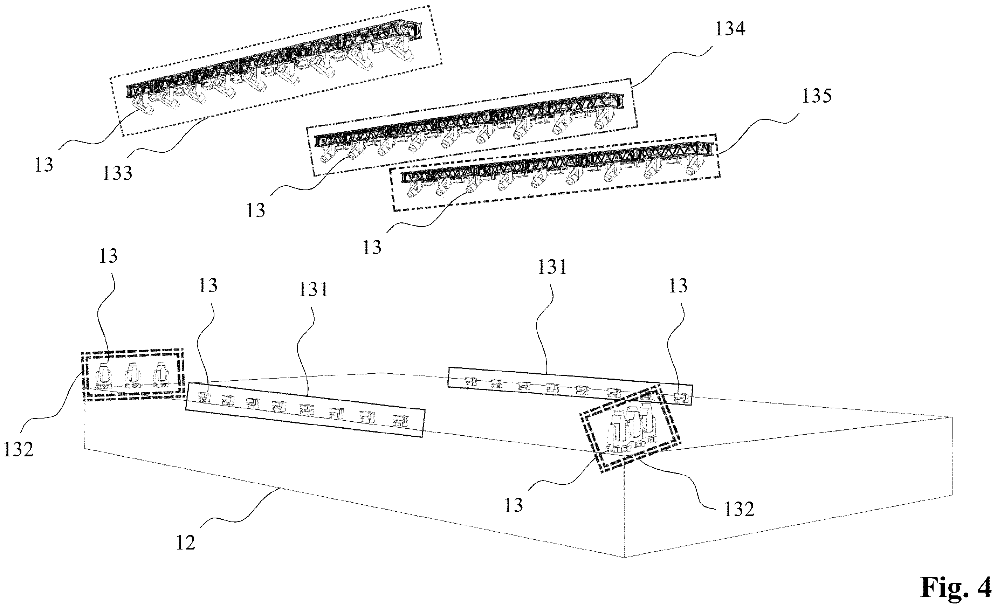

**Fig. 4** zeigt eine Ausführung einer erfindungsgemäßen Gruppierung von Beleuchtungsmitteln 13, die auf einer Bühne 12 angeordnet sind. Die Gruppierung erfolgte anhand von Typ und Anordnung der Beleuchtungsmittel, da gleichartige Typen von Beleuchtungsmitteln 13, die in einer Anordnung zueinander sind, beispielsweise in einer Reihe, häufig ähnliche Bewegungen und/oder Einstellungswechsel durchlaufen. Beispielsweise kann der Effekt, der von einer Reihe von fünf gleichartigen Beleuchtungsmitteln 13 durch zeitversetztes Durchlaufen von Bewegungen und/oder Einstellungswechsel erzielt wird, auf gleiche Weise von einer Reihe von sechs gleichartigen Beleuchtungsmitteln 13 erreicht werden. Die Bewegungen und/oder Einstellungswechsel können gleichzeitig, aber auch zeitversetzt, spiegelverkehrt und/oder verdreht zueinander durchlaufen werden. Die Gruppierungen dienen hauptsächlich dazu, die Anordnung der Beleuchtungsmittel 13 zu abstrahieren und damit die Datenmenge zu reduzieren und vergleichbarer zu machen. Eine erste Gruppierung 131 bilden die im vorderen Bereich und im hinteren Bereich auf der Bühne angeordneten Beleuchtungsmittel 13. Diese sind in der Lage, Licht in verschiedenen Farben abzugeben und dabei verschwenkt zu werden. Eine zweite Gruppierung 132 wird durch die seitlich auf der Bühne angeordneten Beleuchtungsmittel 13 gebildet, die über verschiedene, rotierbare Gobos verfügen, die Farbe wechseln können, verschwenkbar sind sowie einen einstellbaren Fokus, Iris und Zoom haben. Eine dritte Gruppierung 133, eine vierte Gruppierung 134 und eine fünfte Gruppierung 135 werden jeweils durch die an den Traversen angeordneten Beleuchtungsmittel 13 gebildet. Die Beleuchtungsmittel 13 der dritten Gruppierung 133, der vierten Gruppierung 134 und der fünften Gruppierung 135 können ebenfalls die Farbe wechseln, sind verschwenkbar und haben ebenfalls einen einstellbaren Fokus, Iris und Zoom. Alle Beleuchtungsmittel sind mit einem DMX ArtNet Protokoll ansteuerbar.

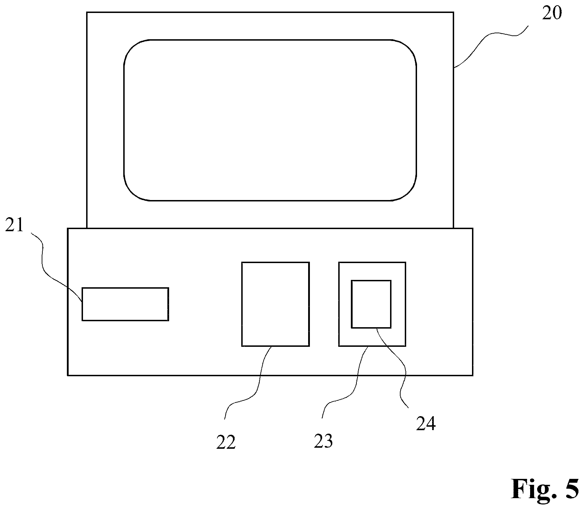

**Fig. 5** zeigt ein erfindungsgemäßes Computersystem 20 mit einer Schnittstelle 21 zum Erhalten von Trainingsdatensätzen und neuen Darbietungsinformationen, einem computerlesbaren Speichermedium (22) zur Erstellung und Speicherung des maschinell lernenden Modells, wobei auf dem Speichermedium (22) ein Computerprogramm-Produkt abgelegt ist, und einer Datenverarbeitungseinrichtung (23) umfassend einen Prozessor (24). Das Computerprogramm-Produkt hat Softwarecodeabschnitte, die derart ausgebildet sind, dass das an anderer Stelle beschriebene Verfahren durch den Prozessor (24) ausführbar ist.

## Patentansprüche

1. Verfahren zur Erzeugung einer neuen Beleuchtungsinformation (8) und/oder eines neuen Beleuchtungsmerkmals umfassend folgende Schritte:
a) Erhalten mindestens eines Trainingsdatensatzes umfassend mindestens eine Darbietungsinformation (1), insbesondere umfassend eine Darbietungsaufnahme, und mindestens eine Beleuchtungsinformation (2), insbesondere umfassend einen Steuerungsdatensatz, wobei die Darbietungsinformation (1) und die Beleuchtungsinformation (2) einander zugeordnet sind;
b) Erstellen eines maschinell lernenden Modells (5) mittels mindestens eines Beleuchtungsmerkmals (4) und mittels mindestens eines Darbietungsmerkmals (3), wobei das mindestens eine Beleuchtungsmerkmal (4) und das mindestens eine Darbietungsmerkmal (3) durch Analysieren vor und/oder während des Erstellens des maschinell lernenden Modells (5) erhalten werden und wobei das mindestens eine Darbietungsmerkmal (3) und das mindestens eine Beleuchtungsmerkmal (4) einander zugeordnet sind;
c) Erhalten einer neuen Darbietungsinformation (6);
d) Ermitteln mindestens eines neuen Beleuchtungsmerkmals (8) und/oder mindestens einer neuen Beleuchtungsinformation mittels Inferenz mit dem maschinell lernenden Modell (5) unter Eingabe der neuen Darbietungsinformation (6) und/oder mindestens eines neuen Darbietungsmerkmals (7), wobei das neue Darbietungsmerkmal (7) durch Analysieren der neuen Darbietungsinformation (6) erhalten wird.

2. Verfahren nach Anspruch 1, wobei das Verfahren einen Schritt e) nach dem Schritt d) umfasst:
e) Generieren mindestens eines Beleuchtungssteuerungsbefehls aus dem mindestens einen neuen Beleuchtungsmerkmal (8).

3. Verfahren nach Anspruch 1 oder 2,
wobei die Darbietungsinformation (1) und die Beleuchtungsinformation (2) eine Zeitkomponente umfassen,
wobei in Schritt b) dem mindestens einen Darbietungsmerkmal (3) und dem mindestens einen Beleuchtungsmerkmal (4) ein Wert der Zeitkomponente zugeordnet wird und/oder ist und beim Erstellen des maschinell lernenden Modells (5) der Wert der Zeitkomponente berücksichtigt wird,
wobei die neue Darbietungsinformation (6) eine neue Zeitkomponente umfasst,
wobei in Schritt d) dem neuen Darbietungsmerkmal (7) ein neuer Wert der neuen Zeitkomponente zugeordnet wird und/oder ist und das Ermitteln des mindestens einen neuen Beleuchtungsmerkmals (8) und/oder der mindestens einen neuen Beleuchtungsinformation mittels Inferenz mit dem maschinell lernenden Modell (5) den neuen Wert der neuen Zeitkomponente berücksichtigt.

4. Verfahren nach Anspruch 3,
wobei in Schritt b) mindestens zwei Darbietungsmerkmale (3) und mindestens zwei Beleuchtungsmerkmale (4) durch Analyse erhalten werden und dem ersten Darbietungsmerkmal (3) und dem ersten Beleuchtungsmerkmal (4) ein erster Wert der Zeitkomponente und dem zweiten Darbietungsmerkmal (3) und dem zweiten Beleuchtungsmerkmal ein zweiter Wert der Zeitkomponente zugeordnet wird und/oder ist,
wobei beim Erstellen des maschinell lernenden Modells (5) die Relation des ersten Werts der Zeitkomponente und des zweiten Werts der Zeitkomponente zueinander berücksichtigt wird,
wobei in Schritt d) mindestens zwei neue Darbietungsmerkmale (7) durch Analyse erhalten werden und dem ersten neuen Darbietungsmerkmal (7) ein erster neuer Wert der neuen Zeitkomponente und dem zweiten Darbietungsmerkmal (7) ein zweiter neuer Wert der neuen Zeitkomponente zugeordnet wird; und
das Ermitteln des mindestens einen neuen Beleuchtungsmerkmals (8) und/oder der mindestens einen neuen Beleuchtungsinformation mittels Inferenz mit dem statistischen Modell (5) die Relation des ersten neuen Werts der neuen Zeitkomponente und des zweiten neuen Werts der neuen Zeitkomponente zueinander berücksichtigt.

5. Verfahren nach einem der vorhergehenden Ansprüche,
wobei die Analyse in Schritt b) und/oder in Schritt d) mindestens zweistufig ist,
wobei in einer ersten Stufe der Analyse mindestens ein Darbietungsmerkmal der ersten Stufe (31) direkt aus der Darbietungsinformation, mindestens ein neues Darbietungsmerkmal der ersten Stufe direkt aus der neuen Darbietungsinformation und/oder ein Beleuchtungsmerkmal der ersten Stufe direkt aus der Beleuchtungsinformation erlangt wird,
wobei in einer n-ten Stufe der Analyse, die nicht die erste Stufe der Analyse ist, mindestens ein Darbietungsmerkmal der n-ten Stufe (32, 33) aus der Darbietungsinformation und/oder mindestens einem Darbietungsmerkmal einer niedrigeren Stufe (32, 31) erlangt wird, mindestens ein neues Darbietungsmerkmal der n-ten Stufe aus der neuen Darbietungsinformation und/oder mindestens einem neuen Darbietungsmerkmal einer niedrigeren Stufe erlangt wird und/oder ein Beleuchtungsmerkmal der n-ten Stufe direkt aus der Beleuchtungsinformation und/oder mindestens einem Beleuchtungsmerkmal einer niedrigeren Stufe erlangt wird.

6. Verfahren nach einem der vorhergehenden Ansprüche,
wobei die Darbietungsinformation (1) und/oder die neue Darbietungsinformation (6) eine Audiodatei, insbesondere eine Audioaufnahme, eine Videodatei, insbesondere eine Videoaufnahme, mindestens eine Abbildung, insbesondere eine Abfolge von Abbildungen, ein Notenblatt und/oder einen Text umfasst.

7. Verfahren nach einem der vorhergehenden Ansprüche,
wobei die Beleuchtungsinformation (2) mindestens einen Steuerungsdatensatz, insbesondere einen Steuerungscode und/oder ein Steuerungsdatenpaket, mindestens einen Simulationsdatensatz, mindestens ein Modell, insbesondere ein virtuelles 3D-Modell, mindestens einen Text, insbesondere eine Konzeptbeschreibung und/oder ein Skript, mindestens eine Abbildung, insbesondere eine Reihe von Abbildungen, mindestens ein Cue, insbesondere eine Reihe von Cues, mindestens ein Preset, mindestens eine Sequenz, mindestens ein Stack, mindestens einen Graphen, insbesondere einen Graphen mit Positionsangaben und/oder Bewegungsangaben, mindestens einen Plan, insbesondere einen Belegungsplan, mindestens eine Videodatei, insbesondere eine Videoaufnahme und/oder eine Simulation, mindestens eine Beschreibung, insbesondere eine Beschreibung umfassend einen Patch, mindestens eine Gruppierung und/oder mindestens einen Algorithmus und/oder mindestens ein Datenpaket, insbesondere umfassend Recipes, MAtricks, Phasers, Timecodes, Macros, Lua Plugins, Filter, Selektionen, Effekte, BitMaps und/oder Generatoren, umfasst.

8. Verfahren nach einem der vorhergehenden Ansprüche,
wobei die Darbietungsinformation (1) und/oder die neue Darbietungsinformation (6) eine Musikinformation, insbesondere eine Musikaufnahme, umfasst und wobei das Darbietungsmerkmal (3) und/oder das neue Darbietungsmerkmal (7) das Tempo, der Takt, der Rhythmus, die Tonart, die Tonfolge, die Tonhöhe, die Stimmlage, das verwendete Instrument, die Art der Verwendung des Instruments, das Arrangement, der Text, das Frequenzspektrum, die Amplitude, der Frequenzausschlag, die Onset-Strength, der Effektivwert, insbesondere der Effektivwert der Frequenz, die MFCCs (Mel Frequency Cepstral Coefficients), ein Kanal, insbesondere eine dem Kanal zugeordnete Richtung, eine Emotion, ein Musikgenre, eine Änderung dieser und/oder eine Anzahl dieser ist.

9. Verfahren nach einem der vorhergehenden Ansprüche,
wobei die Analyse der Darbietungsinformation (1) in Schritt b) und/oder die Analyse der neuen Darbietungsinformation (6) in Schritt d) die Erstellung eines Chromagramms, insbesondere eines constant-Q-Chromagramms oder eines STFT-Chromagramms, eines Tempogramms, eines Spektrogramms, insbesondere eines constant-Q-Spektrogramms oder eines STFT- Spektrogramms, eines Periodogramms, einer Ähnlichkeitsmatrix, einer Änderungshäufigkeitsverteilung, eines Korrelationsmaßes, einer Novelty-Funktion, eines Beat-Tracks und/oder die Separation von Melodie- und Perkussionsquellen umfasst.

10. Verfahren nach einem der vorhergehenden Ansprüche,
wobei das Beleuchtungsmerkmal (4) und/oder das neue Beleuchtungsmerkmal (8) die Lichtfarbe, der Farbton, die Farbtemperatur, die Helligkeit, der Zoom, der Fokus, die Iris, die Form, die Ausrichtung, die Verdrehung, die Position, eine Anordnung, ein Status, ein Typ, eine Stimmung, eine Anzahl von Beleuchtungsmitteln, insbesondere eine Anzahl von Beleuchtungsmitteln eines Typs, ein Maximalwert dieser, ein Minimalwert dieser und/oder eine Veränderung dieser ist.

11. Verfahren nach einem der vorhergehenden Ansprüche,
wobei die Analyse der Beleuchtungsinformation (2) in Schritt b) die Erstellung einer Gruppierung (131, 132, 133, 134, 135), insbesondere einer Gruppierung (131, 132, 133, 134, 135) von Beleuchtungsmitteln anhand von Typ, Ausrichtung und/oder Position, einer Anordnung, einer Simulation, einer Ähnlichkeitsmatrix und/oder einer Änderungshäufigkeitsverteilung umfasst.

12. Verfahren nach einem der vorhergehenden Ansprüche,
wobei in Schritt b) beim Erstellen des maschinell lernenden Modells (5) mindestens ein Ortsmerkmal und/oder in Schritt d) beim Ermitteln des mindestens einen neuen Beleuchtungsmerkmals (7) und/oder der neuen Beleuchtungsinformation mindestens ein neues Ortsmerkmal berücksichtigt wird, wobei das Ortsmerkmal und/oder das neue Ortsmerkmal die Umgebungshelligkeit, die Tageszeit, eine Abmessung, insbesondere eine Abmessung einer Bühne und/oder einer Publikumsfläche, eine Platzkategorie, eine Besucheranzahl, eine Art von Lokalität und/oder eine Publikumsstimmung ist.

13. Verfahren nach einem der vorhergehenden Ansprüche,
wobei das Verfahren einen Schritt f) nach dem Schritt d) umfasst:
e) Evaluieren des mindestens einen neuen Beleuchtungsmerkmals (8) und/oder der mindestens einen neuen Beleuchtungsinformation.

14. Computersystem (20), dazu eingerichtet, eines der Verfahren gemäß Anspruch 1 bis 13 auszuführen, umfassend mindestens eine Schnittstelle (21) zum Erhalten des mindestens einen Trainingsdatensatzes und/oder zum Erhalten der neuen Darbietungsinformation (1) zur Ausführung von Schritt a) und Schritt c), ein computerlesbares Speichermedium (22) zur Erstellung und/oder Speicherung des maschinell lernenden Modells (5) zur Ausführung von Schritt b) und Schritt d) und
mindestens eine Datenverarbeitungseinrichtung (23) eingerichtet zur Ausführung von Schritt b) und Schritt d).

15. Computerprogramm-Produkt, umfassend Softwarecodeabschnitte, die derart ausgebildet sind, dass ein Verfahren nach einem der Verfahrensansprüche 1 bis 13 durch zumindest einen Prozessor (24) ausführbar ist.
